# EUROPEAN PATENT SPECIFICATION

(11) **EP 1 784 472 B1**
(45) Date of publication and mention of the grant of the patent: **24.08.2011**
(21) Application number: 05754317.5
(22) Date of filing: 28.06.2005
(51) Int. Cl.: C09K 15/08, C08K 5/08

(54) **OXYGEN SCAVENGING COMPOSITION AND METHOD FOR MAKING SAME**
SAUERSTOFFABFANGMITTEL UND VERFAHREN ZU SEINER HERSTELLUNG
COMPOSITION DESOXYGENANTE ET SON PROCEDE DE FABRICATION

(30) Priority: 28.06.2004 AU 2004903522
(43) Date of publication of application: 16.05.2007
(73) Proprietor: Commonwealth Scientific and Industrial Research Organisation, Campbell, ACT 2601 (AU)
(72) Inventor: HORSHAM, Mark, Andrew, MASCOT, NSW 2020 (AU); SCULLY, Andrew, David, RYDE, NSW 2112 (AU); MURPHY, James, Keith, Gerard, BAULKHAM HILLS, NSW 2153 (AU); SANTANGELO, Ross, Anthony, CONCORD, NSW 2137 (AU); MCNALLY, Michael, BEROWRA HEIGHTS, NSW 2082 (AU)
(74) Representative: Perry, Robert Edward
(86) International application number: PCT/AU2005/000941
(87) International publication number: WO 2006/000055

(56) References cited:
- US-A- 5 474 593
- US-A- 5 662 878
- US-A- 5 958 254
- DATABASE WPI Week 197944 Thomson Scientific, London, GB; AN 1979-79846B XP002499248 & JP 54 122263 A (KAWASAKI KASEI KOGYO KK) 21 September 1979 (1979-09-21)
- DATABASE WPI Week 198709 Thomson Scientific, London, GB; AN 1987-060499 XP002499249 & JP 62 014940 A (KAWASAKI KASEY KOGYO KK) 23 January 1987 (1987-01-23)
- DATABASE WPI Week 197942, Derwent Publications Ltd., London, GB; AN 1979-76283B, XP008137738 & JP 54 116046 A (KAWASAKI KASEI KOGYO) 10 October 1979
- DATABASE WPI Week 198709, Derwent Publications Ltd., London, GB; AN 1987-060499, XP008137730 & JP 62 014940 A (KAWASAKI KASEI KOGYO) 23 January 1987

## Description

### FIELD OF THE INVENTION

This invention relates to a method of scavenging oxygen using polymeric compositions comprising hydrogenated anthraquinone derivatives, for use in, for example, food and beverage packaging to scavenge unwanted oxygen, which either remains within the package, or otherwise enters the package, following the packaging of the food or beverage. The hydrogenated anthraquinone derivative may also be incorporated into packaging materials, to scavenge oxygen which would otherwise have permeated through the packaging material to enter the inside of a package.

### BACKGROUND OF THE INVENTION

A wide variety of foods, beverages, pharmaceuticals and other materials are susceptible to significant loss in quality if they are exposed to oxygen during storage. The damage can arise from, for example, chemical oxidation of the product and/or microbial growth. In the field of packaging, such damage has been traditionally addressed by generating relatively low-oxygen atmospheres by vacuum packing and/or inert gas flushing. However, these methods are not generally applicable for various reasons. For example, the fast filling speeds commonly used in the food and beverage industries often prevent effective evacuation of, or thorough inert gas flushing of, food and beverage packages, and neither evacuation or inert gas flushing provides any residual capacity for removal of oxygen which may have desorbed from the package contents or entered the package by leakage or permeation. As a consequence, there has been much interest in the identification and development of chemical techniques for generating low-oxygen atmospheres.

In Australian Patent No. 672661 , the present applicant describes novel oxygen scavenging compositions comprising a source of labile hydrogen or electrons and a reducible organic compound, which may be readily activated or "triggered" (ie brought to its oxygen scavenging form) as required by exposure to, for example, ultraviolet (UV) light. The oxygen scavenging compositions, once activated, are capable of scavenging oxygen from an oxygenated atmosphere or liquid in substantial darkness for periods ranging from up to a few minutes or hours to over 100 days.

Most of the exemplified oxygen scavenging compositions described in Australian Patent No. 672661, are based on substituted anthraquinones as the reducible organic compound. Further examples of substituted anthraquinones suitable for use as the reducible organic compound in such oxygen scavenging compositions are disclosed in International Patent Application No. PCT/AU02/00341 (WO 02/076916) .

There is a general need for alternative compounds and compositions useful for scavenging oxygen and, in particular, there is a need for compounds and compositions which do not necessarily require activation subsequent to formation into packaging materials in order to scavenge oxygen.

In addition, the substituted anthraquinones of the prior art discussed above tend to be coloured particularly in the reduced states. Compositions and packaging which contain such anthraquinones also tend to be coloured. For instance, films made using anthraquinone-based compositions can turn a deep yellow colour when the anthraquinones is reduced to activate the oxygen scavenging capacity. The coloured nature of the anthraquinone-based compositions is undesirable in many forms of packaging, particularly in the packaging of foodstuffs. It is therefore desirable, although not essential, that any alternative compounds and compositions for scavenging oxygen have, in general, substantially less colour than the prior art substituted anthraquinones.

### SUMMARY OF THE INVENTION

In a first aspect, the present invention provides a polymeric composition comprising a hydrogenated anthraquinone derivative and/or its enol/enolate tautomer or a substituted derivative thereof, as defined in claim 1.

In a second aspect, the present invention provides a method of scavenging oxygen (particularly ground state molecular oxygen) in an atmosphere or liquid comprising the steps of:
(i) providing a polymeric composition according to the first aspect; and
(ii) exposing the atmosphere or liquid to the composition;
such that at least a portion of the oxygen in the atmosphere or liquid is removed through oxidation of the hydrogenated anthraquinone derivative and/or its enol/enolate tautomer.

In a third aspect, the present invention provides a method of preventing the transmission of oxygen (particularly ground state molecular oxygen) through a package, said method comprising forming a package comprising or consisting of a packaging material, said packaging material comprising a polymeric composition according to the first aspect.

### BRIEF DESCRIPTION OF THE FIGURES

**Figure 1** shows a graph of oxygen transmission over time for EVOH films incorporating 2-Me-THAQ, and EVOH films not incorporating 2-Me-THAQ.
**Figure 2** shows a graph of oxygen transmission over time for MXD6 films incorporating THAQ, and MXD6 films not incorporating THAQ.
**Figure 3** shows UV-visible absorption spectra for THAQ in (a) isopropanol and (b) DMSO.
**Figure 4** shows a UV visible absorption spectrum for THAQ in MXD6 film.
**Figure 5** shows a UV-visible absorption spectrum for 2-Me-THAQ in EVOH film.
**Figure 6** shows the UV-visible absorption spectra for (a) THAQ (b) 2-Me-THAQ, and (c) 2-Me-HHAQ in PETG.

### DETAILED DESCRIPTION OF THE INVENTION

Hydrogenated anthraquinone derivatives, when in neat solid form, do not in general observably react with oxygen. The present applicant has surprisingly found that polymeric films formed by melt compression of hydrogenated anthraquinone derivatives with a range of different commercially available polymers, including ethylene-vinyl alcohol copolymers (EVOH) and polymers comprising metaxylene diamine and adipic acid (eg MXD-6 nylon), absorb oxygen. The films do not require activation subsequent to processing in order to scavenge oxygen.

As can be seen from the Examples, the absorption spectra of the polymeric films comprising THAQ indicates that a different chemical derivative is present in the film. The present applicant believes that this chemical derivative is the enol/enolate tautomer of THAQ. Without being bound by theory, it is believed that the presence of a base, present in residual amounts in some commercially available polymers, can catalyse the formation of the enol/enolate tautomer of the hydrogenated anthraquinone derivative and it is this species that absorbs (ic scavenges) the oxygen. Acid is also known to catalyse the tautomerisation of hydrogenated anthraquinones to the enol/enolate forms. It is also possible that the efficiency of the formation of the enol/enolate tautomer is related to the polarity of the polymer and/or the temperature involved in forming the polymeric composition.

Accordingly, in a first aspect, the present invention provides a polymeric composition comprising a hydrogenated anthraquinone derivative and/or its enol/enolate tautomer or a substituted derivative thereof.

The hydrogenated anthraquinone derivative comprises one or more compounds represented by the following formulae and substituted derivatives thereof:

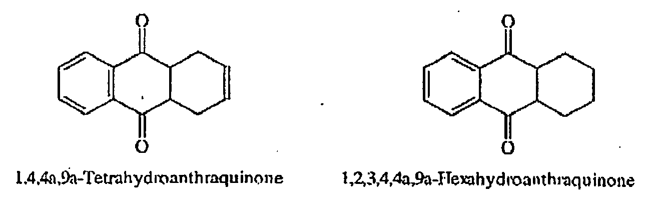

Particularly preferred hydrogenated anthraquinone derivatives are 1,4,4a,9a-Tetrahydroanthraquinone (THAQ) and substituted derivatives thereof. Preferred substituents are alkyl (particularly C₁₋₆ alkyl), halo, carboxylic acid, ester, anhydride, epoxy, hydroxy, and amine groups. An example of a substituted derivative is 2-methyl-1,4,4a,9a-Tetrahydroanthraquinone (2-Me-THAQ).

The present applicant expects, in the light of their discovery, that the direct incorporation into a polymeric composition of the enol/enolate form of a hydrogenated anthraquinonc derivative would also result in a polymeric composition capable of scavenging oxygen.

Accordingly, in a preferred embodiment, the hydrogenated anthraquinone derivative and/or its enol/enolate derivative is an enol/enolate tautomer of a hydrogenated anthraquinone derivative or a substituted derivative thereof.

Preferably, the enol/enolate tautomer of a hydrogenated anthraquinone derivative is selected from a compound of one of the formulas VII and VIII and substituted derivatives thereof: 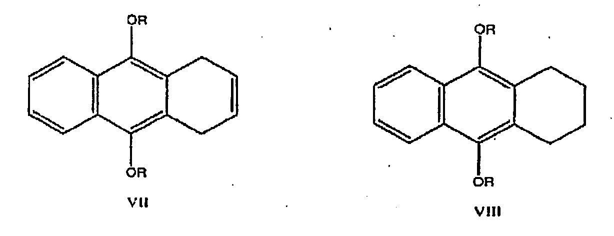 wherein each R is independently selected from hydrogen, a positively charged ion, an ester linkage and an ether linkage. More preferably, both of the R groups are hydrogen or ester linkages.

A preferred positively charged ion is Na⁺.

Preferably, the compound is of formula VII. More preferably, the enol/enolate tautomer of a hydrogenated anthraquinone derivative is the disodium salt of formula VII.

Preferably, the polymeric composition of the first aspect further comprises an acid or base. The amount of acid or base that may be present is preferably in the range of from 0.05% to 1.0% and more preferably in the range of 0.05% to 0.1% by weight of the polymeric composition.

The person skilled in the art would be aware of a number of acids that would be suitable to be incorporated in any particular polymer composition according to the present invention. Suitable acids include organic and inorganic acids such as hydrochloric acid, benzoic acid, p-tolucncsulphonic acid, and acidic salts such as sodium chloride, potassium sulphate and ammonium chloride.

The person skilled in the art would be aware of a number of bases that would be suitable to be incorporated in any particular polymer composition of the present invention. Suitable bases include inorganic bases such as sodium hydroxide and basic salts such as metal salts of carboxylates, carbonates and bicarbonates.

Polymeric compositions of the first aspect may be in a solid, semi-solid (eg a gel) or liquid (eg a polymeric liquid such as an ink) form. They may therefore be applied as, or incorporated in, for example, bottle closure liners, inks, coatings, adhesives (eg polyurethanes), films, sheets, or layers in containers such as trays, bottles or blister packaging either alone or as laminations or co-extrusions. When used in films or layers, they may be blended with typical polymers or copolymers used for construction of films or layers such as those approved for food or pharmaceutical contact. Such films or layers may he produced by extrusion at temperatures between 50°C and 350 °C depending upon chemical composition and molecular weight distribution.

The hydrogenated anthraquinone derivative may be blended into the polymeric composition. The polymeric composition contains a polymer or blend of polymers selected from EVOH, polyamides,polyesters, polyethylenes and polyvinyl alcohols. Preferably, the polymer is EVOH, a polymer comprising metaxylene diamine and adipic acid units (eg MXD-6), or a polymer comprising terephthalic acid and ethylene glycol units (eg PET).

Alternatively, or additionally, the hydrogenated anthraquinone derivative itself may be in a polymerised form either as homopolymers or copolymers. Oligomer forms may also be suitable. Hydrogenated anthraquinone derivative-based monomers can be made, for example, by covalently bonding an ethylenically unsaturated group to ring A or C of the hydrogenated anthraquinone derivative. The hydrogenated anthraquinone derivative may also comprise groups, such as carboxylic acid, ester, anhydride, epoxy, hydroxy, and amine groups, capable of reaction with other polymerisable molecules and preformed polymers including reactions. involving the hydroxy groups of the enol tautomer. For instance, it is contemplated by the present applicant that an enol/enolate tautomer can effectively act as a monomer in a copolymer by bridging through the two alcohol substituents via formation of ester or ether linkages.

The polymeric compositions of the first aspect arc able to scavenge oxygen independently of the presence of a transition, metal catalyst. Accordingly, in a preferred embodiment the polymeric compositions do not comprise a transition metal catalyst.

Preferably, the hydrogenated anthraquinone derivatives and/or their enol/enolate tautomer for use in the method of the present invention are substantially colourless or show reduced colour relative to anthraquinones (particularly 2-ethylanthraquinone). Preferably, the hydrogenated anthraquinone derivative and/or its enol/enolate tautomer is selected such that it has a maximum absorbance in the visible spectrum (400nm - 700nm) that is no more than half that of the reduced form of 2-ethylanthraquinone in EVOH under the same conditions.

In a second aspect, the present invention provides a method of scavenging oxygen (particularly ground state molecular oxygen) in an atmosphere or liquid comprising the steps of:
(i) providing a polymeric composition according to the first aspect; and
(ii) exposing the atmosphere or liquid to the composition;
such that at least a portion of the oxygen in the atmosphere or liquid is removed through oxidation of the hydrogenated anthraquinone derivative and/or its enol/enolate tautomer.

The person skilled in the art would be aware that polymeric compositions of the first aspect may also be used as a chemical barrier to oxygen transmission through a packaging material. Thus, if a packaging material has finite oxygen permeability, the oxygen passing through it from the outside environment can be scavenged by the hydrogenated anthraquinone or enol/enolate tautomer thereof.

Accordingly, in a third aspect, the present invention provides a method of preventing the transmission of oxygen (particularly ground state molecular oxygen) through a package, said method comprising forming a package comprising or consisting of a packaging material, said packaging material comprising a polymeric composition according to the first aspect.

In order that the nature of the present invention may be more clearly understood, preferred forms thereof will now be described with reference to the following non-limiting examples.

### EXAMPLES

### Example 1: Oxygen scavenging by a composition comprising THAQ in EVOH

A composition was prepared by blending 1,4,4a,9a-Tetrahydroanthraquinone (THAQ) at a level of approximately 2%w/w into commercially available EVOH (32 mole% ethylene content) at 190 °C. The composition was then compression moulded to form a film having a thickness of about 30 µm. The film was then quickly transferred into a foil multilayer bag, and this bag was then vacuum-sealed to form a flat package containing essentially no hcadspacc. This foil-lined pouch allows essentially no ingress of oxygen from the atmosphere into the inside of the pouch. Air was then injected into the foil-lined pouch and the pouch stored at constant temperature. The oxygen content inside the pouch was determined using gas chromatography. The change in oxygen concentration in three pouches prepared in the manner described above, and stored at 40°C, is shown in Table 1. The films were substantially colourless and remained that way after exposure to oxygen.

**Table 1.**

| Storage Time (days) | Oxygen content inside pouch (%) | | |
|---|---|---|---|
| | Pouch 1 | Pouch 2 | Pouch 3 |
| 0 | 20.9 | 20.9 | 20.9 |
| 1 | 20.8 | 20.8 | 20.8 |
| 2 | 20.8 | 20.7 | 20.7 |
| 5 | 20.6 | 20.6 | 20.4 |
| 16 | 20.2 | 20.0 | 19.7 |

### Example 2: Oxygen scavenging by a composition comprising 2-Me-THAQ in EVOH

The composition was prepared by blending 2-methyl-1,4,4a,9a-Teirahydroanthraquinone (2-Me-THAQ) at a level of approximately 2%w/w into EVOH (44 mole% ethylene content) at 190 °C. The composition was then compression moulded at 190°C to form films having a thickness of about 50 µm. Each film was then quickly transferred into a foil multilayer bag, and the bags were then vacuum-sealed to form flat packages containing essentially no headspace. This foil-lined pouch allows essentially no ingress of oxygen from the atmosphere into the inside of the pouch. A 4% O₂/96% N₂ gas mixture was then injected into each pouch. The pouches were then placed in a 120 °C oven to simulate the temperature of retorts processing. The oxygen concentration of the headspace was determined using Gas Chromatography. The change in oxygen concentration in the pouches prepared in the manner described above is shown in Table 2. The films were substantially colourless and remained that way after exposure to oxygen.

**Table 2.**

| Storage Time (minutes) | Oxygen content inside pouch (%) | | | | | |
|---|---|---|---|---|---|---|
| | Pouch 1 | Pouch 2 | Pouch 3 | Pouch 4 | Pouch 5 | Pouch 6 |
| 0 | 4.0 | 4.3 | 3.7 | 3.8 | 3.9 | 4.7 |
| 30 | n/r | n/r | 2.7 | n/r | 2.9 | 3.4 |
| 35 | 3.0 | 2.8 | n/r | n/r | n/r | n/r |
| 60 | 2.8 | n/r | n/r | n/r | 2.6 | 3.1 |
| 80 | n/r | n/r | 1.9 | 2.5 | n/r | n/r |

| | | | | | | |
|---|---|---|---|---|---|---|
| * n/r = no measurement made at these times | | | | | | |

### Example 3: Enhanced barrier to oxygen permeation by a composition comprising 2-Me-THAQ in EVOH

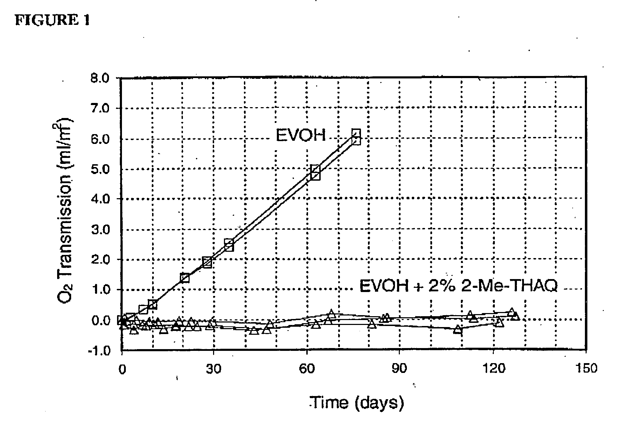

EVOH films (44 mole% ethylene content) containing approximately 2%w/w 2-Me-THAQ were prepared by melt-mixing and then melt-compression at 190 °C. Film thicknesses were in the range 40-60 µm, and care was required to prepare films free from entrapped air bubbles which would otherwise interfere with the measurements. The oxygen transmission measurements were conducted using a technique involving sandwiching an oxygen-sensitive indicator film containing rubrene between two EVOH-based test films and sealing the three layers in a test cell. The test cell is then placed in an illuminated controlled temperature/humidity cabinet. The tests in this work were performed in air at 23 °C and 57% RH. The colour of the oxygen-sensitive indicator film decreases in the presence of oxygen and light, and this change is used to determine the permeation rate of oxygen through the test films. The light in the storage cabinet was filtered such that only the rubrene in the oxygen-sensitive indicator film received light during the course of experiments. The results of the experiments are shown in Figure 1 and they clearly indicate that the incorporation of 2-Mc-THAQ into the EVOH film substantially reduces the amount of oxygen transmitted through the film. The films were substantially colourless and remained that way after exposure to oxygen.

### Example 4: Enhanced barrier to oxygen permeation by a composition comprising THAQ in MXD6

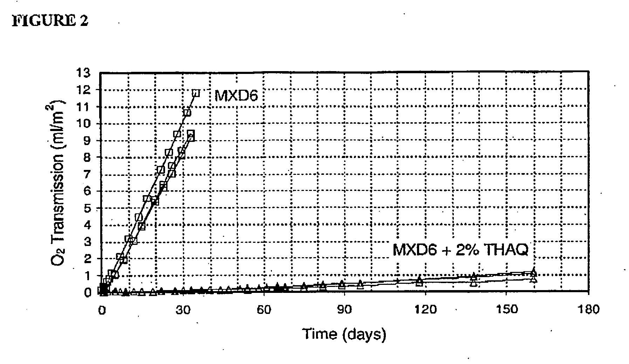

The amorphous MXD6 films containing approximately 2%w/w THAQ were prepared by melt-mixing and then melt-compression at 250 °C. Film thicknesses were in the range 50-70 µm, and care was required to prepare films free from entrapped air bubbles which would otherwise interfere with the measurements. The oxygen transmission measurements were conducted using a technique involving sandwiching an oxygen-sensitive indicator film containing rubrene between two MXD6-based test films and sealing the three layers in a test cell. The test cell is then placed in an illuminated controlled temperature/humidity cabinet. The tests in this work were performed in air at 23 °C and 57% RH. The colour of the oxygen-sensitive indicator film decreases in the presence of oxygen and light, and this change is used to determine the permeation of oxygen through the test films. The light in the storage cabinet was filtered such that only the rubrene in the oxygen-sensitive indicator film received light during the course of experiments. Figure 2 indicates that oxygen transmission through the MXD6 film is reduced substantially when the film comprises THAQ. The films were substantially colourless and remained that way after exposure to oxygen.

### Example 5: Enolisation of THAQ in solution

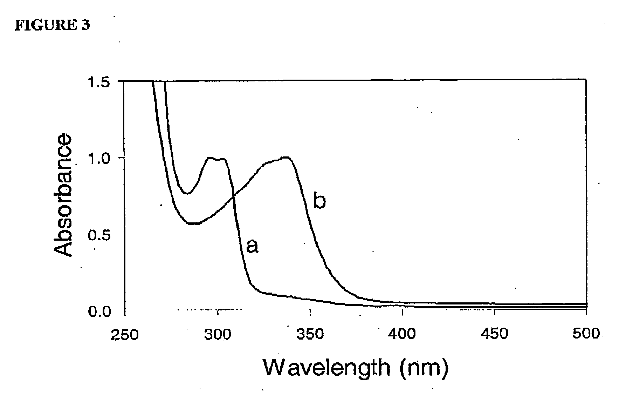

The absorption spectrum of a solution of THAQ dissolved in isopropanol (labelled "a") and a solution of THAQ dissolved in DMSO (labelled "b") is shown in Figure 3. The difference between the absorption spectrum for THAQ in isopropanol and THAQ in DMSO indicates the formation of a different chemical species in DMSO, and the identity of this species was determined by ¹H nmr analysis to be the enol form of THAQ. Enolisation of THAQ was found not to occur in isopropanol solution at room temperature.

### Example 6: Enolisation of THAQ in MXD6

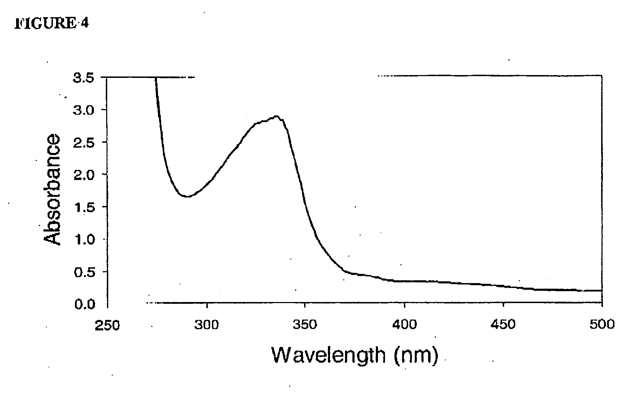

The composition was prepared by blending approximately 2%w/w of THAQ into commercially available MXD6, followed by compression moulding at 250 °C to form a film having a thickness of about 50 µm. The absorption spectrum of this film is shown in Figure 4. The difference between the absorption spectrum of THAQ in isopropanol (see Figure 3, spectrum "a") and THAQ in MXD6 indicates the formation of a different chemical species in the MXD6, and this new species is assigned to the enol form of THAQ due to the very close similarity to the absorption spectrum of the enol tautomer in DMSO shown in Figure 3, spectrum "b".

### Example 7: Enolisation of 2-Me-THAQ in EVOH

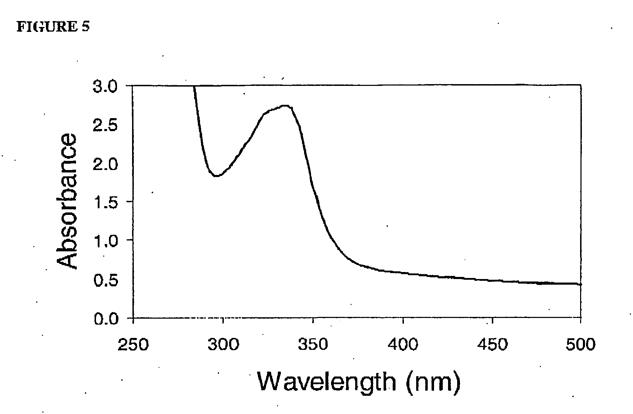

A composition was prepared by blending 2-Me-THAQ at a level of approximately 1%w/w into commercially available EVOH (44 mole% ethylene content) at 190 °C. The composition was then compression moulded to form a film having a thickness of about 75 µm. The absorption spectrum of this film is shown in Figure 5. The difference between the absorption spectrum of THAQ in isopropanol (see Figure 3, spectrum "a") and 2-Me-THAQ in EVOH, indicates the formation of a di fferent chemical species in the EVOH, and this new species is assigned to the enol form of 2-MeTHAQ due to the very close similarity to the absorption spectrum of the enol tautomer of THAQ in DMSO shown in Figure 3, spectrum "b".

### Example 8: Enolisation of hydrogenated anthraquinone derivatives in PETG

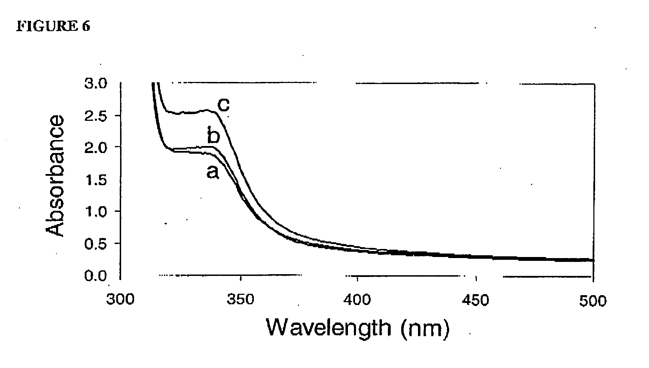

Compositions were prepared by blending THAQ, 2-Me-THAQ and 2-Me-1,2,3,4,4a,9a-Hexahydroanthraquinone (2-Me-HHAQ) at a level of approximately 1%w/w into commercially available PETG at 190 °C. The compositions were then compression moulded to form films having a thickness of about 110 µm. The absorption spectra of these films are shown in Figure 6. The difference between the absorption spectrum of THAQ in isopropanol (see Figure 3. spectrum "a") and these hydrogenated anthraquinone derivatives in PETG indicates the formation of a different chemical species in the PETG, and this new species is assigned to the enol forms of the hydrogenated anthraquinone derivatives due to the close similarity to the absorption spectrum of the enol tautomer of THAQ in DMSO shown in Figure 3, spectrum "b".

## Claims

1. A polymeric composition comprising a hydrogenated anthraquinone derivative and/or its enol/enolate tautomer or a substituted derivative thereof; wherein the polymeric composition contains a polymer selected from EVOH, polyamide, polyester, polyethylene, polyvinyl alcohol and blends thereof; preferably, a polymer comprising metaxylene diamine and adipic acid units, a polymer comprising terephthalic acid and ethylene glycol unit or EVOH; and
wherein the hydrogenated anthraquinone derivative is selected from one or more of the compounds represented by the following formulae and substituted derivatives thereof:

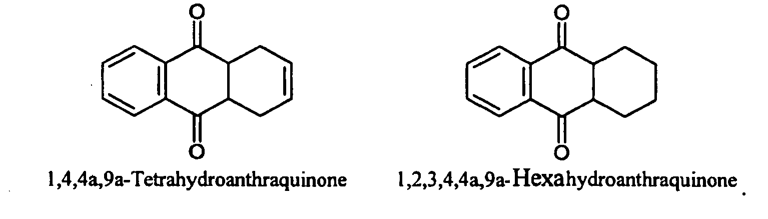

2. A polymeric composition according to claim 1 wherein the hydrogenated anthraquinone derivative is 1,4,4a,9a-Tetrahydroanthraquinone or a substituted derivative thereof.

3. A polymeric composition according to claim 1 or 2 wherein the hydrogenated anthraquinone derivative and/or its enol/enolate derivative is an enol/enolate tautomer of a hydrogenated anthraquinone derivative or a substituted derivative thereof.

4. A polymeric composition according to claim 3 wherein the enol/enolate tautomer of a hydrogenated anthraquinone derivative is selected from a compound of one of the formulas VII and VIII and substituted derivatives thereof: 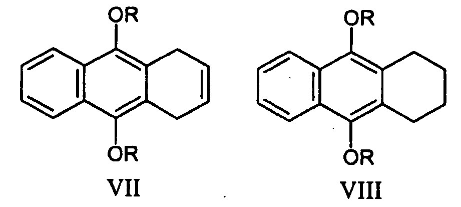 wherein each R is independently selected from hydrogen, a positively charged ion, an ester linkage and an ether linkage.

5. A polymeric composition according to claim 4 wherein the enol/enolate tautomer of a hydrogenated anthraquinone derivative is a compound of formula VII or a substituted derivative thereof.

6. A polymeric composition according to claim 5 wherein the compound of formula VII is the disodium salt of formula VII.

7. A polymeric composition according to any one of claims 1 to 6 further comprising an acid or base.

8. A polymeric composition according to claim 7 wherein the amount of acid or base present is in the range of from 0.05% to 1.0% by weight of the polymeric composition.

9. A polymeric composition according to claim 8 wherein the amount of acid or base present is in the range of 0.05% to 0.1% by weight of the polymeric composition.

10. A polymeric composition according to any one of claims 7 to 9 wherein the acid is selected from the group consisting of hydrochloric acid, benzoic acid, p-toluenesulphonic acid, sodium chloride, potassium sulphate and ammonium chloride.

11. A polymeric composition according to any one of claims 7 to 9 wherein the base is selected from sodium hydroxide and metal salts of carboxylates, carbonates and bicarbonates.

12. A polymeric composition according to any one of claims 1 to 11 wherein the polymeric composition does not comprise a transition metal catalyst.

13. A packaging material comprising a polymeric composition according to any one of claims 1 to 12.

14. A method of scavenging oxygen in an atmosphere or liquid, comprising exposing the atmosphere or liquid to a polymeric composition according to any one of claims 1 to 12, such that at least a portion of the oxygen in the atmosphere or liquid is removed through oxidation of the hydrogenated anthraquinone derivative and/or its enol/enolate tautomer.

15. A method of preventing the transmission of oxygen through a package, said method comprising forming a package comprising or consisting of a packaging material according to claim 13.

## Patentansprüche

1. Polymerzusammensetzung, umfassend ein hydriertes Anthrachinon-Derivat und/oder dessen Enol-/Enolat-Tautomer oder ein substituiertes Derivat desselben;
wobei die Polymerzusammensetzung ein Polymer umfasst, das ausgewählt wird aus:
EVOH, Polyamid, Polyester, Polyethylen, Polyvinylalkohol und Gemischen derselben; vorzugsweise einem Polymer, das Metaxylendiamin und Adipinsäureeinheiten umfasst, einem Polymer, das Terephthalsäure- und Ethylenglykoleinheiten umfasst oder EVOH; und
wobei das hydrierte Anthrachinon-Derivat aus einer oder mehreren der durch die folgenden Formeln dargestellten Verbindungen und substituierten Derivaten derselben ausgewählt wird:

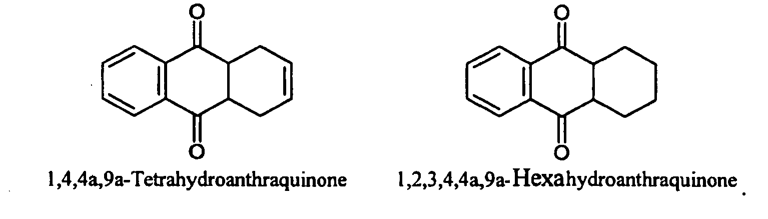

2. Polymerzusammensetzung nach Anspruch 1, wobei es sich bei dem hydrierten Anthrachinon-Derivat um 1,4,4a,9a-Tetrahydroanthrachinon oder ein substituiertes Derivat desselben handelt.

3. Polymerzusammensetzung nach Anspruch 1 oder 2, wobei es sich bei dem hydrierten Anthrachinon-Derivat und/oder seinem Enol-/Enolat-Derivat um ein Enol-/Enolat-Tautomer eines hydrierten Anthrachinon-Derivats oder eines substituierten Derivats desselben handelt.

4. Polymerzusammensetzung nach Anspruch 3, wobei das Enol-/Enolat-Tautomer eines hydrierten Anthrachinon-Derivats aus einer Verbindung mit einer der Formeln VII und VIII und substituierten Derivaten derselben ausgewählt wird: 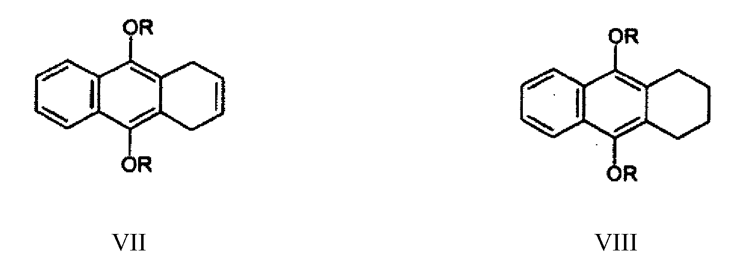 wobei jedes R unabhängig ausgewählt wird aus Wasserstoff, einem positiv geladenen Ion, einer Ester-Bindung und einer Ether-Bindung.

5. Polymerzusammensetzung nach Anspruch 4, wobei es sich bei dem Enol-/Enolat-Tautomer eines hydrierten Anthrachinon-Derivats um eine Verbindung mit der Formel VII oder ein substituiertes Derivat derselben handelt.

6. Polymerzusammensetzung nach Anspruch 5, wobei es sich bei der Verbindung mit der Formel VII um das Dinatriumsalz mit der Formel VII handelt.

7. Polymerzusammensetzung nach einem der Ansprüche 1 bis 6, die weiter eine Säure oder eine Base umfasst.

8. Polymerzusammensetzung nach Anspruch 7, wobei die vorhandene Menge von Säure oder Base im Bereich von 0,05 Gew.-% bis 1,0 Gew.-% der Polymerzusammensetzung beträgt.

9. Polymerzusammensetzung nach Anspruch 8, wobei die vorhandene Menge von Säure oder Base im Bereich von 0,05 Gew.-% bis 0,1 Gew.-% der Polymerzusammensetzung beträgt.

10. Polymerzusammensetzung nach einem der Ansprüche 7 bis 9, wobei die Säure aus der aus Salzsäure, Benzoesäure, p-Toluolsulfonsäure, Natriumchlorid, Kaliumsulfat und Ammoniumchlorid bestehenden Gruppe gewählt wird.

11. Polymerzusammensetzung nach einem der Ansprüche 7 bis 9, wobei die Base ausgewählt wird aus: Natriumhydroxid und Metallsalzen von Carboxylaten, Carbonaten und Bicarbonaten.

12. Polymerzusammensetzung nach einem der Ansprüche 1 bis 11, wobei die Polymerzusammensetzung keinen Übergangsmetallkatalysator umfasst.

13. Verpackungsmaterial, umfassend eine Polymerzusammensetzung nach einem der Ansprüche 1 bis 12.

14. Verfahren zum Abfangen von Sauerstoff in einer Atmosphäre oder Flüssigkeit, umfassend das Aussetzen der Atmosphäre oder Flüssigkeit an eine Polymerzusammensetzung nach einem der Ansprüche 1 bis 12, so dass mindestens ein Teil des Sauerstoffs in der Atmosphäre oder Flüssigkeit durch Oxidation des hydrierten Anthrachinon-Derivats und/oder seines Enol-/Enolat-Tautomers entfernt wird.

15. Verfahren zum Verhindern des Durchlassens von Sauerstoff durch eine Verpackung, wobei das genannte Verfahren das Bilden einer Verpackung umfasst, die ein Verpackungsmaterial nach Anspruch 13 umfasst oder daraus besteht.

## Revendications

1. Une composition polymère comprenant un dérivé anthraquinonique hydrogéné et/ou son tautomère d'enol/enolate ou un dérivé substitué de celui-ci ;
où la composition polymère contient un polymère sélectionné parmi l'EVOH, le polyamide, le polyester, le polyéthylène, l'alcool polyvinylique et des mélanges de ceux-ci ; de préférence un polymère comprenant des unités de diamine de métaxylène et d'acide adipique, un polymère comprenant des unités d'acide téréphtalique et d'éthylène glycol ou d'EVOH, et
où le dérivé anthraquinonique hydrogéné est sélectionné parmi un ou plusieurs composés représentés par les formules suivantes et de dérivés substitués de celui-ci :

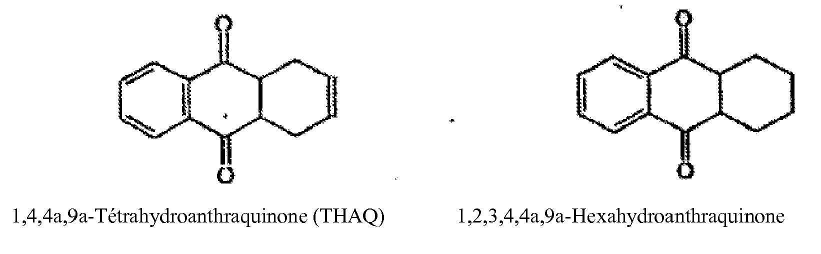

2. Une composition polymère selon la revendication 1 où le dérivé anthraquinonique hydrogéné est 1,4,4a,9a-Tétrahydroanthraquinone (THAQ) ou d'un dérivé substitué de celui-ci.

3. Une composition polymère selon la revendication 1 ou 2 où le dérivé anthraquinonique hydrogéné et/ou son dérivé d'enol/enolate est un tautomère d'enol/enolate d'un dérivé anthraquinonique hydrogéné ou d'un dérivé substitué de celui-ci.

4. Une composition polymère selon la revendication 3 où le tautomère d'enol/enolate d'un dérivé anthraquinonique hydrogéné est sélectionné parmi un composé de l'une des formules VII et VIII et de dérivés substitués de celui-ci : 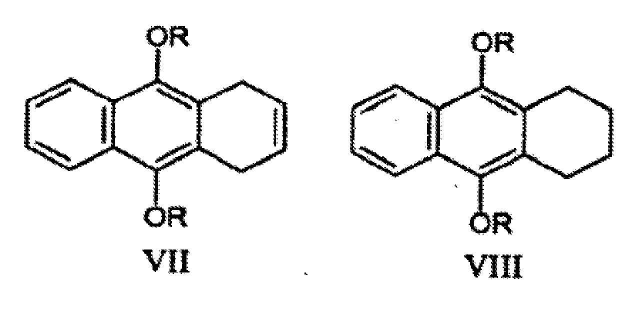 où chaque R est sélectionné indépendamment parmi l'hydrogène, un ion chargé positivement, une liaison d'ester et une liaison d'éther.

5. Une composition polymère selon la revendication 4 où le tautomère d'enol/enolate d'un dérivé anthraquinonique hydrogéné est un composé de la formule VII ou d'un dérivé substitué de celui-ci.

6. Une composition polymère selon la revendication 5 où le composé de la formule VII est le sel disodique de la formule VII.

7. Une composition polymère selon l'une quelconque des revendications 1 à 6 comprenant en plus un acide ou une base.

8. Une composition polymère selon la revendication 7 où la quantité d'acide ou de base présente est dans la plage de 0,05% à 1,0% en poids de la composition polymère.

9. Une composition polymère selon la revendication 8 où la quantité d'acide ou de base présente est dans la plage de 0,05% à 0,1% en poids de la composition polymère.

10. Une composition polymère selon l'une quelconque des revendications 7 à 9 où l'acide est sélectionné dans le groupe constitué par l'acide chlorhydrique, l'acide benzoïque, l'acide p-toluènesulfonique, le chlorure de sodium, le sulfate de potassium et le chlorure d'ammonium.

11. Une composition polymère selon l'une quelconque des revendications 7 à 9 où la base est sélectionnée parmi l'hydroxyde de sodium et des sels métalliques de carboxylates, carbonates et bicarbonates.

12. Une composition polymère selon l'une quelconque des revendications 1 à 11 où la composition polymère ne comprend pas un catalyseur de métal de transition.

13. Un matériau d'emballage comprenant une composition polymère selon l'une quelconque des revendications 1 à 12.

14. Un procédé de piégeage de l'oxygène dans une atmosphère ou un liquide comprenant l'exposition de l'atmosphère ou du liquide à une composition polymère selon l'une quelconque des revendications 1 à 12, de façon qu'au moins une portion de l'oxygène dans l'atmosphère ou le liquide soit éliminée par l'oxydation du dérivé anthraquinonique hydrogéné et/ou de son tautomère d'enol/enolate.

15. Un procédé de prévention de la transmission de l'oxygène à travers un emballage, ledit procédé comprenant la formation d'un emballage comprenant ou constitué d'un matériau d'emballage selon la revendication 13.
